# EUROPÄISCHE PATENTSCHRIFT

(11) **EP 3 083 361 B1**
(45) Veröffentlichungstag und Bekanntmachung des Hinweises auf die Patenterteilung: **06.03.2019**
(21) Anmeldenummer: 14815222.6
(22) Anmeldetag: 28.10.2014
(51) Int. Cl.: B60W 40/12, G06K 9/00, H04N 5/232, B60W 40/13

(54) **VERFAHREN UND VORRICHTUNG ZUR ÜBERWACHUNG EINER ÄUSSEREN ABMESSUNG EINES FAHRZEUGS**
METHOD AND DEVICE FOR MONITORING AN EXTERNAL DIMENSION OF A VEHICLE
PROCÉDÉ ET DISPOSITIF POUR SURVEILLER UNE COTE EXTÉRIEURE D'UN VÉHICULE

(30) Priorität: 16.12.2013 DE 102013226104
(43) Veröffentlichungstag der Anmeldung: 26.10.2016
(73) Patentinhaber: Conti Temic Microelectronic GmbH, 90411 Nürnberg (DE); Application Solutions (Electronics and Vision) Ltd., Lewes Sussex BN7 2AQ (GB)
(72) Erfinder: FEY, Wolfgang, 88131 Bodolz (DE); HANTSCH, Eric, Brighton BN1 3RQ (GB); MOCEK, Vaclav, Seaford BN25 2PU (GB); READE, Gideon, Worthing BN13 3NG (GB); SAWARD, Ian, Lewes BN7 1BH (GB); UPPARA, Ravikanth, Seaford BN25 3ER (GB); WELLER, Dave, Lewes BN8 6DF (GB)
(86) Internationale Anmeldenummer: PCT/DE2014/200603
(87) Internationale Veröffentlichungsnummer: WO 2015/090300

(56) Entgegenhaltungen:
- WO-A1-2004/109326
- DE-A1-102012 010 126
- US-A- 5 102 089
- US-A- 5 119 241
- US-A1- 2009 091 436
- US-A1- 2012 229 639
- US-A1- 2013 076 007

## Beschreibung

Die Erfindung betrifft ein Verfahren und eine Vorrichtung zur Überwachung einer äußeren Abmessung eines Fahrzeugs, insbesondere hinsichtlich einer Veränderung der äußeren Abmessung eines Fahrzeugs aufgrund einer äußeren Fahrzeugbeladung.

Seit einigen Jahren werden in Fahrzeugen vermehrt optische Sensorsysteme eingesetzt, insbesondere Kameras zur Erfassung des Fahrzeugumfeldes. Mittels spezieller elektronischer Einrichtungen und Software können diese Systeme verschiedene fahrerunterstützende Funktionen übernehmen, weshalb derartige Systeme auch unter der Bezeichnung Assistenzsysteme bzw. Fahrerassistenzsysteme bekannt sind. Einige dieser Assistenzsysteme sind bereits in der Lage autonome oder teilautonome Fahrmanöver durchzuführen, beispielsweise Einpark- und/oder Ausparkmanöver.

Ein System zur Einparkunterstützung ist beispielsweise aus der DE 10 2009 057 837 A1 bekannt. Das System dient zur Unterstützung des Fahrers beim Einparken in eine Parkfläche einer Fahrzeuggarage. Mittels eines Kamerasystems wird die Umgebung des Fahrzeugs erfasst. Die Umgebungsbilder werden zur Erkennung der Garageneinfahrt der Fahrzeuggarage mit einem Bilderkennungsverfahren ausgewertet. Nach Erkennung der Garageneinfahrt wird das Umgebungsbild mit einem Zeichenerkennungsverfahren nach wenigstens einer auf einer Garagenrückwand angeordneten Markierung ausgewertet. Anschließend wird die Position des Fahrzeugs in Bezug auf die Garageneinfahrt und die Markierung ermittelt und es werden in Abhängigkeit der ermittelten Position des Fahrzeugs zur Steuerung des Fahrzeugs auf die Parkfläche erforderliche Lenkwinkel anzeigende Steuersignale erzeugt. Die Steuersignale können als Lenkhinweise dem Fahrer angezeigt oder wenigstens einem Steuersystem zugeführt werden, um ein halbautomatisches oder vollautomatisches Fahren des Fahrzeugs auf die Parkfläche zu realisieren.

Für Assistenzsysteme zur Durchführung autonomer oder teilautonomer Fahrmanöver können heutzutage bereits Sensorsysteme eingesetzt werden, die in der Lage sind, die gesamte Fahrzeugumgebung zu erfassen, im Sinne einer 360°-Sicht bzw. im Sinne einer Rundumsicht um das Fahrzeug.

Ein derartiges Verfahren zur Überwachung einer äußere Abmessung eines Fahrzeugs ist aus dem gattungsbildenden Dokument WO 2004/109326 A1 bekannt. Die DE 10 2006 036 933 A1 zeigt hierzu ein Verfahren zur Erzeugung eines Gesamtbilds aus zumindest zwei sich überlappenden Einzelbildern, wobei die Einzelbilder durch an einem Kraftfahrzeug angeordnete Kameras erfasst und durch eine Bildverarbeitungseinrichtung zu dem Gesamtbild zusammengefügt werden.
Systeme wie in der DE 10 2006 036 933 A1 beschrieben, werden auch als Top View oder Surround View Systeme bezeichnet. Surround View Systeme umfassen typischerweise mehrere im oder am Fahrzeug angeordnete (reale) Aufnahmekameras, mit denen Bilddaten aus verschiedenen Bereich der Fahrzeugumgebung erzeugt werden. Die Bilddaten werden daraufhin in einer elektronischen Bilddatenverarbeitungseinrichtung unterschiedlichen Transformationen unterzogen und es wird ein zusammengesetztes Bild der gesamten Fahrzeugumgebung generiert. Dadurch kann beispielsweise eine Ansicht der um das Fahrzeug herum liegenden Umgebung aus einer Perspektive oberhalb des Fahrzeugdachs (Vogelperspektive) erhalten werden, d.h. es wird das Bild aus der Perspektive einer virtuellen Kamera, die sich oberhalb des Fahrzeugs befindet, erzeugt. Das Gesamtbild kann dem Fahrer des Kraftfahrzeugs fortlaufend auf einer Anzeigevorrichtung angezeigt werden, beispielsweise um Rangier- oder Parkmanöver zu erleichtern, oder es können die Gesamtbilddaten durch Assistenzsysteme zur Durchführung autonomer und teilautonomer Fahrmanöver verarbeitet bzw. ausgewertet werden, beispielsweise zur Objekterkennung und zur Ableitung von Steuerbefehlen.

Gerade bei Assistenzsystemen, die zur Durchführung von autonomen oder teilautonomen Fahrmanövern dienen, liegt eine hohe Prozessverantwortung bei diesen Systemen. Es muss insbesondere zu jeder Zeit während eines autonomen oder teilautonomen Fahrmanövers sichergestellt sein, dass andere Verkehrsteilnehmer nicht gefährdet werden und dass keine Schäden am eigenen oder an anderen Fahrzeugen entstehen können.

Die US 2013/076007 A1, welche den nächstliegenden Stand der Technik zur vorliegenden Erfindung darstellt, offenbart ein Verfahren und eine Vorrichtung, wobei ein äußerer Bereich eines Fahrzeugs mittels wenigstens einer Kamera erfasst wird, wobei die mittels der Kamera erzeugten Bilddaten hinsichtlich einer äußeren Fahrzeugbeladung verarbeitet werden.

Die WO 2004/109326 A1 betrifft eine Vorrichtung zur Ermittlung einer räumlichen Ausrichtung eines mit einem Zugfahrzeug verbundenen Aufliegers, wobei Sensormittel Konturen des Aufliegers erfassen.

Um die Sicherheit und Durchführbarkeit von autonomen bzw. teilautonomen Fahrmanövern sowie grundsätzlich auch von manuell durchgeführten Fahrmanövern gewährleisten zu können, müssen jederzeit die äußeren Abmessungen des Fahrzeugs bekannt sein. Das betrifft insbesondere die Höhe, Länge und Breite des Fahrzeugs. Diese können aufgrund von Fahrzeugbeladungen, beispielsweise aufgrund einer Beladung eines Anhängers, einer Heckladefläche, eines Dachträgers oder Heckträgers verändert sein.

Aufgabe der vorliegenden Erfindung ist es, ein Verfahren und eine Vorrichtung anzugeben, mit denen Abmessungen eines Fahrzeugs, insbesondere eine mögliche Veränderung der aktuellen äußeren Abmessungen eines Fahrzeugs überwacht werden können.

Diese Aufgabe wird durch ein Verfahren mit den Merkmalen nach Anspruch 1 und durch eine Vorrichtung mit den Merkmalen nach Anspruch 9 gelöst. Vorteilhafte Ausgestaltungen und Weiterbildungen sind Gegenstand von Unteransprüchen, wobei auch Kombinationen und Weiterbildungen einzelner Merkmale miteinander denkbar sind.

Ein wesentlicher Gedanke der Erfindung besteht darin, wenigstens eine äußere Abmessung eines Fahrzeugs mittels wenigstens einer am Fahrzeug angeordneten Kamera zu überwachen. Dabei wird insbesondere überwacht, ob eine Veränderung wenigstens einer äußeren Abmessung des Fahrzeugs aufgrund einer äußeren Fahrzeugbeladung vorliegt, d.h. die Tatsache, dass eine Änderung vorliegt, und/oder es wird das Ausmaß der Abmessung bzw. der Veränderung ermittelt. Die Kamera kann dabei entweder direkt einen Bereich des Fahrzeugs erfassen, in dem eine äußere Fahrzeugbeladung angeordnet sein kann, und/oder einen Bereich, in dem zumindest ein Schatten einer äußeren am Fahrzeug angeordneten Fahrzeugbeladung erkennbar sein kann.

Wie einleitend erwähnt werden Kameras heutzutage bereits vielfach in Fahrzeugen angeordnet, so dass vorzugsweise eine oder mehrere bereits im Fahrzeug vorhandene Kameras zur Umsetzung des erfindungsgemäßen Verfahrens bzw. für die erfindungsgemäße Vorrichtung eingesetzt werden können. Auch die Nachrüstung eines Fahrzeugs mit einer oder mehreren Kameras ist im Rahmen der Erfindung denkbar.

Ebenfalls sind bereits Bildverarbeitungseinrichtungen und Verfahren bekannt, die in der Lage sind, insbesondere mittels geeigneter Bildverarbeitungsalgorithmen, Fahrzeugbeladungen und vorzugsweise deren Dimensionen in mittels einer Kamera erfassten Bilddaten zu erfassen.

Das erfindungsgemäße Verfahren zur Überwachung wenigstens einer äußeren Abmessung eines Fahrzeugs umfasst vorzugsweise die folgenden Schritte:
- Erfassung eines Bereichs des Fahrzeugs mittels wenigstens einer am Fahrzeug angeordneten Kamera;
- Verarbeitung von mittels der wenigstens einen Kamera erzeugten Bilddaten hinsichtlich einer äußeren Fahrzeugbeladung;
- Überwachung der wenigstens einen äußeren Abmessung in Abhängigkeit der Verarbeitung der Bilddaten.

Bei der Überwachung der wenigstens einen äußeren Abmessung des Fahrzeugs wird vorzugsweise ermittelt, ob eine Veränderung der wenigstens einen äußeren Abmessung des Fahrzeugs aufgrund einer äußeren Fahrzeugbeladung vorliegt. Dabei kann insbesondere ermittelt werden, ob eine aktuelle äußere Abmessung des Fahrzeugs gegenüber einer vorherigen Bestimmung der Abmessung und/oder gegenüber einer Ausgangsabmessung, beispielsweise die Grundabmessung des Fahrzeugs, aufgrund der Anordnung einer äußeren Fahrzeugbeladung verändert ist. Weiterhin kann ermittelt werden, ob die aktuelle äußere Abmessung gegenüber einer vorherigen Abmessung vergrößert oder verkleinert ist. Bei der Überwachung der äußeren Abmessung des Fahrzeugs wird weiterhin vorzugsweise auch das Ausmaß der äußeren Abmessung bzw. das Ausmaß der Veränderung bestimmt, d.h. die Größe bzw. Dimension der aktuellen bzw. der veränderten äußeren Abmessung des Fahrzeugs.

Gemäß einer bevorzugten Ausgestaltung des erfindungsgemäßen Verfahrens wird mittels der wenigstens einen Kamera ein Bereich des Fahrzeugs erfasst, in dem eine äußere Fahrzeugbeladung angeordnet sein kann und somit in mittels der Kamera erfassten Bilddaten erkennbar ist. Dabei wird beispielsweise mittels einer Rückfahr- bzw. Rückraumkamera ein Heckbereich des Fahrzeugs erfasst, in dem eine Fahrzeugbeladung z.B. auf einem Anhänger, einer Heckladefläche oder an einem Heckträger (z.B. für Gepäck oder Fahrräder) angeordnet sein kann. Weiterhin kann beispielsweise mittels einer seitlich am Fahrzeug angeordneten und geeignet ausgerichteten Kamera, z.B. mittels einer Kamera für ein Spiegelersatzsystem, ein Dachbereich des Fahrzeugs erfasst werden, in dem eine Fahrzeugbeladung z.B. auf einem Dachgepäckträger angeordnet sein kann.

Insbesondere dann, wenn mittels der wenigstens einen Kamera ein Bereich des Fahrzeugs erfasst wird, in dem eine äußere Fahrzeugbeladung angeordnet und erkennbar sein kann, d.h. wenn eine direkte Erfassung der Fahrzeugbeladung im Rahmen des erfindungsgemäßen Verfahrens vorgesehen ist, umfasst das Verarbeiten der Bilddaten vorzugsweise das Suchen nach charakteristischen Merkmalen äußerer Fahrzeugbeladungen in den Bilddaten.

Alternativ oder zusätzlich kann das Verarbeiten der Bilddaten das Suchen nach Bildbereichen mit Bewegung mittels eines Optischen-Fluss-Verfahrens umfassen.

Gemäß einer weiteren bevorzugten Ausgestaltung des erfindungsgemäßen Verfahrens wird mittels der wenigstens einen Kamera ein Bereich des Fahrzeugs und/oder ein Bereich um das Fahrzeug erfasst, in dem zumindest ein Schatten bzw. ein Schattenwurf einer äußeren Fahrzeugbeladung erkennbar sein kann. Dabei kann beispielsweise eine äußere Fahrzeugverkleidung, z.B. die Motorhaube, die Kofferraumabdeckung oder eine seitliche Fahrzeugverkleidung, und/oder ein bestimmter Bereich der Fahrzeugumgebung, z.B. die Straßen- bzw. Fahrbahnoberfläche, mittels der wenigstens einen Kamera erfasst werden.

Insbesondere dann, wenn mittels der wenigstens einen Kamera ein Bereich des Fahrzeugs und/oder ein Bereich um das Fahrzeug erfasst wird, in dem ein Schatten einer äußeren Fahrzeugbeladung erkennbar sein kann, d.h. wenn eine indirekte Erfassung der Fahrzeugbeladung im Rahmen des erfindungsgemäßen Verfahrens vorgesehen ist, umfasst das Verarbeiten der Bilddaten vorzugsweise das Suchen nach einem Schatten bzw. nach einem Schattenwurf einer äußeren Fahrzeugbeladung.

Erfindungsgemäß kann die Überwachung der wenigstens einen äußeren Abmessung des Fahrzeugs somit sowohl durch direktes Erfassen einer äußeren Fahrzeugbeladung mittels der wenigstens einen Kamera erfolgen, als auch indirekt, durch Erfassen eines Schattens bzw. Schattenwurfs einer äußeren Fahrzeugbeladung. Dabei ist das Verfahren nicht auf die ausschließliche Verwendung der direkten oder der indirekten Erfassung eingeschränkt, sondern es können auch beide Methoden in Kombination eingesetzt werden.

Im Rahmen des erfindungsgemäßen Verfahrens erfolgt die Überwachung der wenigstens einen äußeren Abmessung, insbesondere die Bestimmung deren Ausmaßes, vorzugsweise in Abhängigkeit einer bekannten Einbauposition und/oder Ausrichtung der wenigstens einen Kamera. Dabei können, insbesondere wenn erkannt wurde, dass eine äußere Fahrzeugbeladung am Fahrzeug angeordnet ist, in Abhängigkeit der Einbauposition und der Ausrichtung der Kamera aus den Bilddaten die Dimensionen der Fahrzeugbeladung ermittelt und daraus die wenigstens eine äußere Abmessung des Fahrzeugs bzw. deren Veränderung bestimmt werden.

Die erfindungsgemäße Vorrichtung zur Überwachung wenigstens einer äußeren Abmessung eines Fahrzeugs umfasst wenigstens eine Kamera, die am Fahrzeug angeordnet ist und Bilddaten aus einem Bereich des Fahrzeugs und/der aus einem Bereich um das Fahrzeug erfasst. Die Vorrichtung umfasst weiterhin Mittel zum Verarbeiten der mittels der wenigstens einen Kamera erfassten Bilddaten hinsichtlich einer äußeren Fahrzeugabmessung sowie Mittel zur Bestimmung der wenigstens einen äußeren Fahrzeugabmessung in Abhängigkeit der Verarbeitung der Bilddaten.

Die erfindungsgemäße Vorrichtung ist dabei vorzugsweise zur Umsetzung eines Verfahrens gemäß einer der vorangehend beschriebenen Ausgestaltungen ausgebildet.

Weitere Vorteile und Anwendungsmöglichkeiten der vorliegenden Erfindung ergeben sich aus der nachfolgenden Beschreibung in Verbindung mit dem in der Zeichnung dargestellten Ausführungsbeispiel.

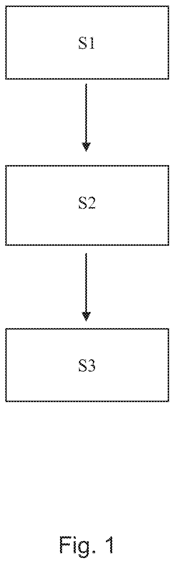

Fig. 1 zeigt ein Flussdiagramm eines Ausführungsbeispiels des erfindungsgemäßen Verfahrens zur Kamera-basierten Überwachung wenigstens einer äußeren Abmessung eines Fahrzeugs.

Nach der Erfindung ist vorgesehen, dass ein Bereich des Fahrzeugs, in dem ein äußere Fahrzeugbeladung angeordnet und/oder in dem zumindest ein Schatten einer solchen erkennbar sein kann, von wenigstens einer Kamera erfasst bzw. überwacht wird (Schritt S1 in Fig. 1).

Unter dem Bereich des Fahrzeugs kann insbesondere auch ein Umgebungsbereich des Fahrzeugs verstanden werden. Die Kamera kann dabei beispielsweise im Innenraum oder im Außenbereich des Fahrzeugs montiert und auf den entsprechenden Bereich ausgerichtet sein, um Bilddaten des entsprechenden Bereichs zu erzeugen. Bei der wenigstens einen Kamera kann es sich insbesondere um wenigstens eine bereits im Fahrzeug vorhandene Kamera eines Fahrerassistenzsystems handeln, beispielsweise um eine oder mehrere Kameras eines Surround View Systems. Weiterhin kann im Rahmen des erfindungsgemäßen Verfahrens auch das Gesamtbild eines Surround View Systems verarbeitet werden. Prinzipiell reicht es aus, einen Bereich zu erfassen, in sich die Fahrzeugbeladung bzw. deren Schatten zumindest teilweise befindet bzw. erkennen lässt. Es kann natürlich auch ein derart großer Bereich erfasst werden, dass die vollständige Fahrzeugladung erfasst wird. Der erfasste Bereich kann ferner derart gewählt sein, dass ohne am Fahrzeug angeordneter Fahrzeugbeladung das Umfeld des Fahrzeugs zumindest teilweise erfasst wird, insbesondere um Bewegungen in den von der Kamera erfassten Bildern erkennen zu können. Nach der Erfindung ist weiterhin vorgesehen, dass die von der wenigstens einen Kamera erzeugten Bilddaten hinsichtlich einer äußeren Fahrzeugbeladung verarbeitet werden (Schritt S2 in Fig. 1).

Die Verarbeitung der Bilddaten, insbesondere hinsichtlich einer äußeren Fahrzeugbeladung in den mittels der wenigstens einen Kamera erfassten Bilddaten, kann dabei erfindungsgemäß die Suche nach charakteristischer Merkmale äußerer Fahrzeugbeladungen umfassen, insbesondere dann, wenn mittels der Kamera ein Bereich des Fahrzeugs erfasst wird, so dass Fahrzeugbeladungen direkt in den Bilddaten erkennbar sein können. Hierzu können insbesondere sogenannte und aus dem Stand der Technik grundsätzlich bekannte Mustererkennungs- bzw. Mustervergleichsverfahren zu Einsatz kommen, bei denen beispielsweise nach Konturen einer äußeren Fahrzeugbeladung in den Bilddaten gesucht wird.

Die Erkennung einer Fahrzeugbeladung kann weiterhin auf Basis einer Erkennung von Strukturen erfolgen, die für Fahrzeugbeladungen charakteristisch sind, z.B. bestimmter typischer Strukturen wie gerade längliche Elemente von Trägerstreben oder -stangen.

Zudem kann ein Vergleich der aktuell erfassten Bilddaten mit gespeicherten Bilddaten erfolgen, die von der Kamera zu einem Zeitpunkt erfasst wurden, zu dem keine Fahrzeugbeladung am Fahrzeug angeordnet war. Ein solcher Vergleich der Bilddaten kann dabei insbesondere fortlaufend erfolgen.

Weiterhin kann ein Klassifikator eingesetzt werden, der mit Bildern einer Vielzahl von Fahrzeugbeladungen oder Varianten davon trainiert wurde. Durch das Training findet und "lernt" der Klassifikator charakteristische Merkmale von Fahrzeugbeladungen. Diese Merkmale speichert der Klassifikator für eine Klassifikation.

Im Rahmen der Verarbeitung der Bilddaten kann weiterhin eine Suche nach Bildbereichen mit Bewegung erfolgen. Dieses kann mit einem sogenannten "Optischer-Fluss-Verfahren" erfolgen. Die Existenz von Bewegung in einem Bildbereich lässt darauf schließen, dass dieser nicht von einem fest mit dem Fahrzeug verbundenen Teil verdeckt ist. Zur Erkennung einer Fahrzeugbeladung kann das Bild dabei in Teilbereiche eingeteilt und für jeden Teilbereich kann erfasst werden, ob in diesem Bereich Bewegung erkannt wurde oder nicht. Auf diese Weise kann ein weiteres Bild erzeugt werden, das nicht die Helligkeit sondern die Bewegungsintensität als Wert hat. Auf diesem Bild kann dann die eigentliche Erkennung einer äußeren Fahrzeugbeladung erfolgen. Hierzu können Bereiche ohne Bewegung in den Bildern mit Bewegungsintensität erkannt werden, und die erkannten Bereiche ohne Bewegung können hinsichtlich charakteristischer Merkmale des entsprechenden Bereichs des Fahrzeugs mit/oder ohne Ladung klassifiziert werden.

Wird mittels der Kamera ein Bereich des Fahrzeugs erfasst, in dem ein Schatten einer äußeren Fahrzeugbeladung erkennbar sein kann, beispielsweise indem die Kamera derart angeordnet und ausgerichtet ist, dass diese zumindest teilweise einen Bereich der Fahrbahnoberfläche oder eine äußere Fahrzeugverkleidung erfasst, können die von der Kamera erzeugten Bilddaten ebenfalls hinsichtlich charakteristischer Merkmale einer äußeren Fahrzeugbeladung in den Bilddaten verarbeitet werden.

Die Verarbeitung der Bilddaten, insbesondere hinsichtlich einer äußeren Fahrzeugbeladung, umfasst dabei vorzugsweise die Suche nach Schatten bzw. nach einem Schattenwurf einer äußeren Fahrzeugbeladung, d.h. eines Schattenwurfs beispielsweise auf dem Fahrbahnuntergrund und/oder an einer äußeren Fahrzeugverkleidung.

Bei der Suche nach einem Schatten bzw. nach einem Schattenwurf können gleichermaßen eines oder mehrere der zur direkten Erfassung bereits beschriebenen Verfahren zum Einsatz kommen, d.h. Bildverarbeitungsverfahren zur Erkennung von Mustern-, Strukturen und Kontoren sowie geeignete Klassifikatoren oder Optischer-Fluss-Verfahren.

Nach der Erfindung ist es weiterhin vorgesehen, dass die Überwachung der wenigstens einen äußeren Abmessung des Fahrzeugs in Abhängigkeit der Verarbeitung der Bilddaten erfolgt (Schritt S3 in Fig. 1). Unter der wenigstens einen äußeren Abmessung des Fahrzeugs kann dabei beispielsweise die aktuelle und/oder maximale Höhe, Breite oder Länge des Fahrzeugs bzw. deren Veränderung verstanden werden.

Im einfachsten Fall kann unter der Überwachung der wenigstens einen äußeren Abmessung des Fahrzeugs die Bestimmung verstanden werden, ob eine Veränderung der äußeren Abmessung vorliegt oder nicht. Dabei kann in Abhängigkeit der Verarbeitung der Bilddaten, insbesondere wenn bei der Verarbeitung erkannt wurde, dass eine äußere Fahrzeugbeladung am Fahrzeug angeordnet ist, eine Information generiert und beispielsweise dem Fahrer oder einem anderen System zur Verfügung gestellt werden, dass eine Veränderung der äußeren Abmessungen des Fahrzeugs vorliegt. Weiterhin kann eine Information generiert werden, ob eine Veränderung der Höhe, Läge und/oder Breite des Fahrzeugs vorliegt.

Weiterhin kann im Rahmen der Überwachung der wenigstens einen äußeren Abmessung das Ausmaß der entsprechenden Abmessung bestimmt werden, d.h. es wird die Größe bzw. Dimension der neuen bzw. aktuell vorherrschenden Abmessung ermittelt. Dabei kann z.B. die maximalen Breite, Länge oder Höhe des Fahrzeugs berechnet und/oder es können die entsprechenden Abmessungen bezogen auf einen oder mehrere bestimmten Bereich des Fahrzeugs ermittelt werden, z.B. bezogen auf die vordere und hintere Radachse. Die entsprechenden Abmessungen können weiterhin bezogen auf ein fahrzeugbezogenes Koordinatensystem ermittelt werden. Es kann dabei insbesondere ein detailliertes dreidimensionales Modell des Fahrzeugs geniert werden, beispielsweise im Sinne eines Belegungsgitters oder eines Höhen-, Breiten- und/oder Längenprofils des Fahrzeugs entlang der jeweiligen Achse eines fahrzeugbezogenen Koordinatensystems erstellt werden.

Die vorzugsweise fortlaufend ermittelten Abmessungen des Fahrzeugs können insbesondere für eines oder mehrere Fahrerassistenzsysteme verwendet bzw. diesen Systemen bereitgestellt werden, beispielsweise Systemen zur Durchführung autonomer oder teilautonomer Fahrmanöver, insbesondere um Trajektorien berechnen und die Sicherheit der Durchführung dieser Fahrmanöver gewährleisten zu können.

Die Überwachung und die Bestimmung des Ausmaßes der wenigstens einen äußeren Abmessung des Fahrzeugs erfolgt im Rahmen der Erfindung vorzugsweise in Abhängigkeit bekannter Einbaupositionen und Ausrichtungen der einen oder mehreren Kameras, die im Rahmen des Verfahrens eingesetzt werden.

Bei der Überwachung der äußeren Abmessungen des Fahrzeugs in Abhängigkeit einer Suche nach Schatten bzw. eines Schattenwurfs des Fahrzeugs bzw. von Fahrzeugbeladungen können bei der Bestimmung zudem Zusatzinformationen wie Ort, Datum, Tageszeit, Sonnenstand sowie die Ausrichtung des Fahrzeugs berücksichtigt werden, insbesondere ein Wank-, Nick-, Gier- und Rollwinkel des Fahrzeugs.

Das oben beschriebene Verfahren kann als Computerprogramm implementiert sein, das von einem Rechner ausgeführt wird, der die in Fig. 1 gezeigten Schritte des Verfahrens ausführt. Dem Rechner werden als Eingabe die von der mindestens einen Kamera erfassten Bilddaten zur weiteren Verarbeitung durch das Verfahren zugeführt. Der Rechner kann durch ein Steuergerät eines Fahrzeugs oder auch eines Fahrerassistenzsystems implementiert sein. Das erfindungsgemäße Verfahren kann auch als Teil einer Fahrerassistenzsoftware implementiert sein. Der in Fig. 1 in Form eines Flussdiagramms gezeigte Verfahrensablauf kann in der Praxis zyklisch oder periodisch oder auch nur einmal oder zweimal während einer Fahrt ausgeführt werden.

### BEZUGSZEICHEN

- S1: (Schritt 1) Erfassen eines Bereichs des Fahrzeugs mittels wenigstens einer am Fahrzeug angeordneten Kamera
- S2: (Schritt 2) Verarbeitung von mittels der wenigstens einen Kamera erzeugten Bilddaten hinsichtlich einer äußeren Fahrzeugbeladung
- S3: (Schritt 3) Bestimmung der wenigstens einen äußeren Abmessung in Abhängigkeit der Verarbeitung der Bilddaten.

## Patentansprüche

1. Verfahren zur Überwachung wenigstens einer äußeren Abmessung eines Fahrzeugs mit den folgenden Schritten:
- Erfassung eines Bereichs des Fahrzeugs mittels wenigstens einer an dem Fahrzeug angeordneten Kamera,
- Verarbeitung von mittels der wenigstens einen Kamera erzeugten Bilddaten hinsichtlich einer äußeren Fahrzeugbeladung,
- Überwachung der wenigstens einen äußeren Abmessung des Fahrzeugs in Abhängigkeit der Verarbeitung der Bilddaten, **dadurch gekennzeichnet, dass** bei der Überwachung der wenigstens einen äußeren Abmessung zumindest ermittelt wird, ob eine Veränderung der wenigstens einen äußeren Abmessung des Fahrzeugs vorliegt.

2. Verfahren nach Anspruch 1,
**dadurch gekennzeichnet, dass**
- bei der Überwachung der wenigstens einen äußeren Abmessung das Ausmaß der wenigstens einen äußeren Abmessung ermittelt wird.

3. Verfahren nach einem der vorangegangenen Ansprüche, **dadurch gekennzeichnet, dass**
- mittels der wenigstens einen Kamera ein Bereich des Fahrzeugs erfasst wird, in dem eine äußere Fahrzeugbeladung angeordnet sein kann.

4. Verfahren nach einem der vorangegangenen Ansprüchen, **dadurch gekennzeichnet, dass**
- das Verarbeiten der Bilddaten das Suchen nach charakteristischen Merkmalen äußererer Fahrzeugbeladungen in den Bilddaten umfasst.

5. Verfahren nach einem der vorangegangenen Ansprüchen, **dadurch gekennzeichnet, dass**
- das Verarbeiten der Bilddaten das Suchen nach Bildbereich mit Bewegung in den Bilddaten mittels eines Optischen-Fluss-Verfahrens umfasst.

6. Verfahren nach einem der vorangegangenen Ansprüche, **dadurch gekennzeichnet, dass**
- mittels der wenigstens einen Kamera ein Bereich des Fahrzeugs und/oder ein Bereich um das Fahrzeug erfasst wird, in dem ein Schatten einer äußeren Fahrzeugbeladung erkennbar sein kann.

7. Verfahren nach einem der vorangegangenen Ansprüche, **dadurch gekennzeichnet, dass**
- das Verarbeiten der Bilddaten das Suchen nach Schatten einer äußeren Fahrzeugbeladung umfasst.

8. Verfahren nach einem der vorangegangenen Ansprüche, **dadurch gekennzeichnet, dass**
- die Überwachung der wenigstens einen äußeren Abmessung in Abhängigkeit einer bekannten Einbauposition und Ausrichtung der wenigstens einen Kamera erfolgt.

9. Vorrichtung zur Überwachung wenigstens einer äußeren Abmessung eines Fahrzeugs, umfassend
- wenigstens eine Kamera, die am Fahrzeug angeordnet ist und Bilddaten aus einem Bereich des Fahrzeugs erfasst,
- Mittel zur Verarbeitung der mittels der wenigstens einen Kamera erfassten Bilddaten hinsichtlich einer äußeren Fahrzeugbeladung sowie
- Mittel zur Überwachung der wenigstens einen äußeren Fahrzeugabmessung in Abhängigkeit der Verarbeitung der Bilddaten,
wobei die Vorrichtung zur Umsetzung eines Verfahrens nach einem der Ansprüche 1 bis 8 ausgebildet ist.

## Claims

1. A method for monitoring at least one external dimension of a vehicle, having the following steps of:
- capturing a region of the vehicle by means of at least one camera arranged on the vehicle,
- processing image data produced by means of the at least one camera with respect to an external vehicle load,
- monitoring the at least one external dimension of the vehicle depending on the processing of the image data, **characterised in that** during the monitoring of the at least one external dimension it is at least determined whether there is a change in the at least one external dimension of the vehicle.

2. The method according to Claim 1,
**characterised in that**
- the magnitude of the at least one external dimension is determined during the monitoring of the at least one external dimension.

3. The method according to any one of the preceding claims, **characterised in that**
- a region of the vehicle in which an external vehicle load may be arranged is captured by means of the at least one camera.

4. The method according to any one of the preceding claims, **characterised in that**
- the processing of the image data comprises searching for characteristic features of external vehicle loads in the image data.

5. The method according to any one of the preceding claims, **characterised in that**
- the processing of the image data comprises searching by means of an optical flow method for image regions in the image data in which there is motion.

6. The method according to any one of the preceding claims, **characterised in that**
- a region of the vehicle and/or a region surrounding the vehicle in which a shadow of an external vehicle load may be detectable is captured by means of the at least one camera.

7. The method according to any one of the preceding claims, **characterised in that**
- the processing of the image data comprises searching for shadows of an external vehicle load.

8. The method according to any one of the preceding claims, **characterised in that**
- the monitoring of the at least one external dimension is performed depending on a known installation position and orientation of the at least one camera.

9. A device for monitoring at least one external dimension of a vehicle, comprising
- at least one camera that is arranged on the vehicle and captures image data from a region of the vehicle,
- means for processing the image data captured by means of the at least one camera with respect to an external vehicle load, as well as
- means for monitoring the at least one external vehicle dimension depending on the processing of the image data, wherein the device is configured to implement a method according to any one of Claims 1 to 8.

## Revendications

1. Procédé pour surveiller au moins une dimension extérieure d'un véhicule, comportant les étapes suivantes:
- détection d'une région du véhicule par au moins une caméra disposée sur le véhicule,
- traitement de données d'images relatives à une charge extérieure du véhicule, générées par l'au moins une caméra,
- surveillance de l'au moins une dimension extérieure du véhicule en fonction du traitement des données d'image, **caractérisé en ce que**, pendant la surveillance de l'au moins une dimension extérieure, est détecté au moins s'il est présent un changement de l'au moins une dimension extérieure du véhicule.

2. Procédé selon la revendication 1 **caractérisé en ce que**
- pendant la surveillance de l'au moins une dimension, est détectée la mesure de l'au moins une dimension extérieure.

3. Procédé selon une quelconque des revendications précédentes, **caractérisé en ce que**
- une région du véhicule, dans laquelle peut être disposée une charge extérieure du véhicule, est détectée à l'aide de l'au moins une caméra.

4. Procédé selon une quelconque des revendications précédentes, **caractérisé en ce que**
- le traitement des données d'image comprend la recherche, parmi les données d'image, de caractéristiques de charges extérieures de véhicule.

5. Procédé selon une quelconque des revendications précédentes, **caractérisé en ce que**
- le traitement des données d'image comprend la recherche, parmi les données d'image, de parties d'image comprenant du mouvement, moyennant un procédé de flux optique.

6. Procédé selon une quelconque des revendications précédentes, **caractérisé en ce que**
- à l'aide de l'au moins une caméra est détectée une région du véhicule et/ou une région autour du véhicule, dans laquelle peut être reconnue une ombre d'une charge extérieure du véhicule.

7. Procédé selon une quelconque des revendications précédentes, **caractérisé en ce que**
- le traitement des données d'image comprend la recherche d'ombres d'une charge extérieure du véhicule.

8. Procédé selon une quelconque des revendications précédentes, **caractérisé en ce que**
- la surveillance de l'au moins une dimension est effectuée en fonction de la position de montage et de l'orientation de l'au moins une caméra, qui sont connues.

9. Dispositif de surveillance d'au moins une dimension extérieure d'un véhicule, comprenant
- au moins une caméra, qui est disposée sur le véhicule et qui détecte des données d'images d'une région du véhicule,
- des moyens pour traiter des données d'image respectives à une charge extérieure du véhicule, détectées à l'aide de l'au moins une caméra, ainsi que
- des moyens pour surveiller l'au moins une dimension extérieure du véhicule en fonction du traitement des données d'image,
le dispositif étant formé pour mettre en oeuvre un procédé selon une quelconque des revendications 1 à 8.
